# EUROPÄISCHE PATENTANMELDUNG

(11) **EP 0 593 856 A1**
(43) Veröffentlichungstag der Anmeldung: **27.04.1994**
(21) Anmeldenummer: 93111320.3
(22) Anmeldetag: 14.07.1993
(51) Int. Cl.: H02G 1/12

(54) **Abisoliergerät**

(30) Priorität: 21.10.1992 DE 4235536
(71) Anmelder: Weidmüller Interface GmbH & Co., D-32760 Detmold (DE)
(72) Erfinder: Danter, Laurence Keith, Newbury Park, CA 91320 (US); Herzog, Armin, D-32760 Detmold (DE); Wilmes, Manfred, D-32760 Detmold (DE)
(74) Vertreter: TER MEER - MÜLLER - STEINMEISTER & PARTNER

(57) **Zusammenfassung**

Ein Abisoliergerät nach der Erfindung weist einen einen Bearbeitungskanal (6) enthaltenen Gerätekörper (1), wenigstens eine Messerkassette (33) zum Positionieren wenigstens eines Abisoliermessers (45) am Umfang des Bearbeitungskanals (6) sowie in einer senkrecht zu seiner Kanallängsrichtung (7) liegendenden Ebene und einen mit dem Gerätekörper (1) verbindbaren Klemmkörper (10) zum Halten der Messerkassette (33) auf. Dabei enthält der Klemmkörper (10) ein Messerkassetten-Aufnahmemaul (26), wobei im Aufnahmemaul (26) Haltemittel (29, 30) vorhanden sind, um die Messerkassette (33) an in Kanallängsrichtung (7) unterschiedlichen Positionen zu halten. Die Messerkassette (33) weist eine in Kanallängsrichtung sehr viel geringere Breite als das Aufnahmemaul (26) auf. Daher können auch mehrere Messerkassetten (33) gleichzeitig im Aufnahmemaul (26) an gewünschte Stellen positioniert werden.

## Beschreibung

Die Erfindung betrifft ein Abisoliergerät gemäß dem Oberbegriff des Patentanspruchs 1.

Ein derartiges Abisoliergerät ist bereits aus der EP 0 206 376 B1 bekannt. Zum bekannten Abisoliergerät gehören ein einen Bearbeitungskanal aufweisender Gerätekörper, wenigstens eine Messerkassette zum Positionieren wenigstens eines Abisoliermessers am Umfang des Bearbeitungskanals sowie in einer senkrecht zu seiner Kanallängsrichtung liegenden Ebene und ein mit dem Gerätekörper verbindbarer Klemmkörper zum Halten der Messerkassette.

Das Abisoliergerät läßt sich z. B. zum Abisolieren von Koaxialkabeln verwenden, wozu mehrere in unterschiedlicher Tiefe liegende Umhüllungsschichten wie z. B. Isolationsschichten, Abschirmschichten, usw., an unterschiedlichen in Kabellängsrichtung liegenden Positionen durchtrennt werden müssen. Zu diesem Zweck befinden sich mehrere Abisoliermesser in entsprechenden Abständen innerhalb der Messerkassette. Wird das Koaxialkabel in den Bearbeitungskanal hineingelegt und dort mit Hilfe einer Klemmeinrichtung gegen die Abisoliermesser gedrückt, so lassen sich die Umhüllungsschichten des Koaxialkabels durchtrennen, wenn das Abisoliergerät anschließend um das Koaxialkabel herumgedreht wird. Sämtliche Abisoliermesser befinden sich in nur einer einzigen Messerkassette, wobei die Abstände zwischen den Abisoliermessern fest vorgegeben sind. Sollen daher Schichten eines Koaxialkabels in anderen Abständen durchtrennt werden, muß eine neue Messerkassette in das Abisoliergerät eingesetzt werden, in welcher die Abisoliermesser die zugehörigen Abstände voneinander aufweisen. Mit Hilfe von Stellgliedern, die sich innerhalb des Klemmkörpers befinden, lassen sich die Abisoliermesser innerhalb der Messerkassette mehr oder weniger weit in Richtung des Bearbeitungskanals verschieben, um somit unterschiedlich tief einschneiden zu können.

Mit dem genannten Abisoliergerät lassen sich nicht nur Koaxialkabel abisolieren sondern auch andere elektrische Leiter mit kreisrundem Querschnitt, die z. B. aus mehreren konzentrisch zueinanderliegenden Schichten aufgebaut sind. Zu denken wäre auch an Schläuche, beschichtete Seile, und dergleichen.

Der Erfindung liegt die Aufgabe zugrunde, ein Abisoliergerät der eingangs genannten Art so weiterzubilden, daß man hinsichtlich der Anordnung der Abisoliermesser innerhalb des Gerätekörpers flexibler ist. Die Verschwenkstellung der Abisoliermesser in Richtung auf den Bearbeitungskanal zu soll darüber hinaus nicht mehr durch Einstellmittel am Klemmkörper bestimmt werden, da dann jedesmal eine Neueinstellung der Einstellmittel erforderlich wäre, wenn nacheinander an ein und derselben Klemmkörperposition Abisoliermesser mit unterschiedlichen Verschwenkstellungen zu positionieren sind.

Die Lösung der gestellten Aufgabe ist im kennzeichnenden Teil des Patentanspruchs 1 angegeben. Vorteilhafte Ausgestaltungen der Erfindung sind den Unteransprüchen zu entnehmen.

Ein Abisoliergerät nach der Erfindung zeichnet sich dadurch aus, daß
- der Klemmkörper ein Messerkassetten-Aufnahmemaul aufweist,
- die Messerkassette in Kanallängsrichtung eine sehr viel geringere Breite als das Aufnahmemaul hat, und
- im Aufnahmemaul Haltemittel vorhanden sind, um die Messerkassette an in Kanallängsrichtung unterschiedlichen Positionen zu halten.

Durch die erfindungsgemäße Ausgestaltung des Klemmkörpers ist es möglich, eine oder mehrere Messerkassetten, deren Breite nur ein Bruchteil der Breite des Messerkassetten-Aufnahmemauls trägt, an unterschiedlichen Positionen im Aufnahmemaul anzuordnen, so daß eine Vielzahl von Positionskombinationen mit einer nur relativ geringen Anzahl an Messerkassetten realisierbar ist. Dabei können sich in jeweils einer Messerkassette ein oder mehrere Abisoliermesser befinden.

Zur Einstellung der Verschwenkposition der jeweiligen Abisoliermesser in Richtung auf den Bearbeitungskanal zu sind entsprechende Verstellmittel direkt in die Messerkassette integriert, so daß sich in den Klemmkörper an ein und derselben Stelle nacheinander Abisoliermesser mit unterschiedlichen Verschwenkpositionen einsetzen lassen, ohne Maßnahmen am Klemmkörper selbst treffen zu müssen. Dies erleichtert die Vorbereitung eines Abisoliervorgangs ganz erheblich, da jetzt nur noch Messerkassetten ausgewählt und eingesetzt werden müssen, in denen die Abisoliermesser hinsichtlich ihrer Verschwenkposition schon voreingestellt sind. Zu diesem Zweck können die Messerkassetten entsprechend markiert sein.

Nach einer sehr vorteilhaften Ausgestaltung der Erfindung sind die Haltemittel durch an einander gegenüberliegenden Maulseiten vorhandene Zahnreihen gebildet, in deren Zwischenräume Zähne einführbar sind, die sich an gegenüberliegenden Kanten der Messerkassetten befinden. Hierdurch wird erreicht, daß das Positionsraster zur Anordnung der Messerkassetten in Längsrichtung des Bearbeitungskanals sehr fein ist, so daß gewünschte Abisolierpositionen sehr exakt eingenommen werden können.

Vorzugsweise öffnet sich das Messerkassetten-Aufnahmemaul in Richtung zum Bearbeitungskanal hin, so daß durch den rückseitigen Maulbereich, gegen den die Messerkassetten geschoben werden, unmittelbar ein Anschlag zur Messerkassettenpositionierung erhalten wird.

Nach einer Weiterbildung der Erfindung besteht jede Messerkassette aus zwei über ein Scharnier miteinander verbundenen Seitenwänden, die das Abisoliermesser zwischen sich haltend aufnehmen. Eine solche Messerkassette weist einen relativ einfachen Aufbau auf und ist daher äußerst kostengünstig herstellbar. Besteht sie aus Kunststoff, so kann das Scharnier ein Filmscharnier sein, wodurch sich die Herstellung der Messerkassette noch weiter vereinfacht. Sie kann z. B. ein Kunststoffpreß- oder Spritzteil sein.

Nach einer anderen Weiterbildung der Erfindung weisen die Seitenwände vordere Ausnehmungen zur bereichsweisen Freilegung der Schneidkante des Abisoliermessers auf. Das Abisoliermesser befindet sich also im wesentlichen innerhalb der Messerkassette, so daß ein sicherer Halt gewährleistet ist. Darüber hinaus verringert sich dadurch auch die Verletzungsgefahr für einen Benutzer, wenn er die Messerkassette in den Klemmkörper einsetzen will, da das Abisoliermesser im wesentlichen durch die Seitenwände der Messerkassette umhüllt ist.

Eine sehr vorteilhafte weitere Ausgestaltung der Erfindung besteht darin, daß an den oberen und unteren Kanten der jeweiligen Seitenwände der Messerkassette Zahnreihenabschnitte vorhanden sind, die senkrecht zur Zahnlängsrichtung die jeweilige Seitenwand in Richtung zur anderen Seitenwand überragen und bei zusammengeklappten Seltenwänden jeweils oben und unten ein gemeinsames Zahnreihenfeld ergeben.

Wird die Messerkassette mit den gemeinsamen Zahnreihenfeldern oben und unten in die entsprechenden Zahnreihenfelder des Messerkassetten-Aufnahmemauls hineingeschoben, so können sich dann die Seitenwände der Messerkassette nicht mehr voneinander entfernen, da infolge des Zahneingriffs eine derartige Bewegung nicht mehr möglich ist. Eine Öffnung der Messerkassette wird auf diese Weise verhindert, so daß ein sicherer Halt des Abisoliermessers innerhalb der Messerkassette gewährleistet ist.

Nach einer anderen Ausgestaltung der Erfindung ist das Abisoliermesser um einen Schwenkzapfen schwenkbar gelagert, wobei zwischen den Seitenwänden Stellmittel zur Einstellung der Verschwenkstellung des Abisoliermessers vorhanden sind. Die Verstellmittel weisen einen zwischen den Seitenwänden drehfest gehaltenen Block mit Gewindedurchgangsbohrung auf, durch die eine Gewindestange hindurchgeschraubt ist. Je nach Axialposition der Gewindestange wird dann eine entsprechend andere Verschwenkposition des Abisoliermessers eingenommen, das mit Hilfe der Gewindestange um den Schwenkzapfen verschwenkbar ist. Um zu verhindern, daß sich das Abisoliermesser zu weit um den Verschwenkzapfen herumdreht und damit zu weit aus der Messerkassette herausragt, befindet sich im Abisoliermesser ein sich in Verschwenkrichtung erstreckendes Langloch, durch das ein zweiter Zapfen hindurchragt, der mit einer der Seitenwände der Messerkassette fest verbunden ist. Zapfen und Langloch bilden auf diese Weise einen Anschlag zur Begrenzung der Verschwenkung des Abisoliermessers.

Wie bereits erwähnt, läßt sich die Verschwenkposition durch Drehung der Gewindestange verändern. Um bei geschlossener Messerkassette die Gewindestange drehen zu können, befindet sich an entsprechender Stelle im Scharnier eine Öffnung, so daß das stirnseitige Ende der Gewindestange zugänglich ist, in welchem sich z. B. ein Schlitz oder eine Vielkantöffnung befinden kann.

Die Erfindung wird nachfolgend unter Bezugnahme auf die Zeichnung näher beschrieben. Es zeigen:
**Fig. 1** eine perspektivische Darstellung des Abisoliergeräts, wobei Gerätekörper und Klemmkörper zu erkennen sind,
**Fig. 2** eine perspektivische Darstellung nur des Gerätekörpers,
**Fig. 3** eine perspektivische Darstellung des Klemmkörpers mit davor liegenden Messerkassetten, die in den Klemmkörper eingesteckt werden sollen,
**Fig. 4** eine perspektivische Darstellung des Klemmkörpers, in den bereits eine der Messerkassetten hineingesteckt worden ist,
**Fig. 5** eine perspektivische Darstellung des Klemmkörpers mit drei eingesteckten Messerkassetten, und
**Fig. 6** eine Draufsicht auf die Innenseite einer aufgeklappten Messerkassette, wobei auf einer der Seitenwände ein Abisoliermesser liegt.

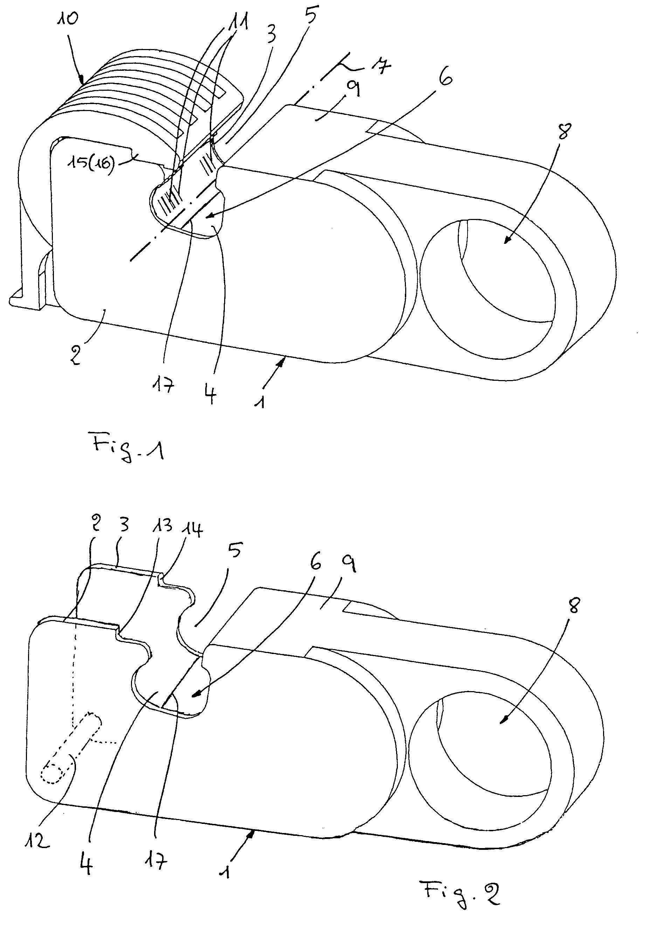

Die Figur 1 zeigt ein Abisoliergerät nach der Erfindung in perspektivischer Darstellung. Dieses Abisoliergerät weist einen länglichen Gerätekörper 1 auf, der in einer senkrecht zu seiner Längsrichtung liegenden Ebene einen im wesentlichen rechteckförmigen Querschnitt hat. Zum Gerätekörper 1 gehören eine linke Wand 2 und eine rechte Wand 3, die Seitenwände bilden und parallel zueinander angeordnet sind. Beide Seitenwände 2 und 3 weisen ausgehend von ihrer oberen Kante und einander gegenüberliegende Ausnehmungen 4 und 5 auf, um einen Bearbeitungskanal 6 zu bilden, der sich senkrecht zur Wandfläche der Seitenwände 2, 3 erstreckt. In diesen Bearbeitungskanal 6 kann ein abzuisolierendes Gut eingeführt werden, beispielsweise ein Koaxialkabel. Eine Kanallängsrichtung des Bearbeitungskanals 6 ist in Figur 1 mit dem Bezugszeichen 7 versehen.

An der Vorderseite des Gerätekörpers 1 befindet sich eine Durchgangsöffnung 8, die sich parallel zur Kanallängsrichtung 7 erstreckt. Diese Durchgangsöffnung 8 weist einen so großen Durchmesser auf, daß ein Benutzer des Abisoliergeräts seinen Finger hindurchstecken kann. Auf diese Weise läßt sich das gesamte Abisoliergerät bei entsprechender Bewegung des Fingers um das abzuisolierende und als Drehachse verwendete Gut herumdrehen, wenn sich dieses im Bearbeitungskanal 6 befindet und dort entsprechend gelagert wird. Hierzu können sich im Innern des Gerätekörpers 1 nicht dargestellte Andruckmittel finden, die sich über ebenfalls nicht dargestellte und am Umfang der Durchgangsöffnung 8 vorhandene Betätigungsmittel von der Vorderseite des Gerätekörpers her in den Bearbeitungskanal 6 hineinbewegen lassen. Das im Bearbeitungskanal 6 vorhandene strangförmige Gut wird dann zur Rückseite des Gerätekörpers gedrängt, wobei es dabei in Anlage mit Abisoliermessern kommt, wie noch beschrieben wird. Ein oberes Wandelement 9 verbindet die Seitenwände 2 und 3 an derjenigen Seite des Bearbeitungskanals 6, die zur Vorderseite des Gerätekörpers 1 gerichtet ist, während die Seitenwände 2 und 3 an der unteren Kante durch ein weiteres Wandelement miteinander verbunden sind, das parallel zum oberen Wandelement 9 verläuft.

Es sei darauf hingewiesen, daß die Andruckmittel und die Betätigungsmittel nicht zum Gegenstand der vorliegenden Erfindung gehören und bereits aus der EP 0 206 376 B1 bekannt sind.

Wie die Figur 1 weiter erkennen läßt, befindet sich an der Rückseite des Gerätekörpers 1 ein Klemmkörper 10. Dieser Klemmkörper 10 ist mit dem Gerätekörper 1 lösbar verbunden und läßt sich in diesen klemmend einsetzen. Der Klemmkörper 10 ist mit Abisoliermesser enthaltenden Messerkassetten 11 bestückt, wie in Figur 1 angedeutet ist, die mit ihrer Vorderseite am Umfang des Bearbeitungskanals 6 zu liegen kommen, wenn der Klemmkörper 10 vollständig in den Gerätekörper 1 eingesetzt ist. Dabei liegen die Messerkassetten 11 den zuvor genannten Andruckmitteln gegenüber. Die Messerkassetten 11 sind so im Klemmkörper 10 angeordnet, daß die in ihnen befindlichen Abisoliermesser in einer Ebene zu liegen kommen, die senkrecht zur Kanallängsrichtung 7 verläuft. Mehrere Messerkassetten 11 können dabei an unterschiedlichen Positionen in den Klemmkörper 10 eingesetzt werden, wie noch beschrieben wird. Sie lassen sich also wahlweise in Längsrichtung des Bearbeitungskanals 6 innerhalb des Klemmkörpers 10 verteilen, um gewünschte gegenseitige Positionen zueinander einzunehmen, die an die entsprechenden Abisolieraufgaben angepaßt sind. In Figur 1 sind nur drei Messerkassetten zu erkennen. Es können aber auch mehr oder weniger sein. Wichtig ist, daß sich die Breite jeweils einer Messerkassette 11 nicht über die gesamte in Kanallängsrichtung 7 ersteckende Breite des Klemmkörpers 10 erstreckt. Vielmehr beträgt die Breite einer Messerkassette 11 in Kanallängsrichtung 7 nur einen Bruchteil der entsprechenden Breite des Klemmkörpers 10, so daß Positionsvariationen möglich sind. Beispielsweise beträgt die Breite des Klemmkörpers 10 im Bereich des Aufnahmemauls etwa 2 cm, während die Breite einer Messerkassette, die mit einem Messer bestückt ist, etwa 3 mm beträgt.

Die Figur 2 zeigt den genaueren Aufbau des Gerätekörpers 1 in seinem rückseitigen Bereich.

An der hinteren unteren Kante der Seitenwände 2 und 3 befindet sich eine Verbindungsachse 12, um die Seitenwände 2 und 3 zusamenzuhalten. Diese Verbindungsachse 12 dient gleichzeitig als Drehachse für den Klemmkörper 10, auf die sich der Klemmkörper 10 klemmend aufsetzen läßt. Darüber hinaus weisen die beiden Seitenwände 2 und 3 im oberen hinteren Bereich Rastansätze 13 und 14 auf, die entsprechende Rastnasen 15, 16 des Klemmkörpers 10 klemmend hintergreifen, wie die Figur 1 zeigt, wenn der Klemmkörper 10 vollständig in den Gerätekörper 1 eingesetzt ist. Die Rastansätze 13, 14 sind durch Stufen an derjenigen Seite des Bearbeitungskanals 6 gebildet, die zur Rückseite des Gerätekörpers 1 weist. In diese Stufen greifen die Rastnasen 15, 16 von oben ein.

Ein in den Figuren 1 und 2 gezeigter Querträger 17 dient zur Bildung des Bodens des Bearbeitungskanals 6 und gleichzeitig als Abstützelement für nicht dargestellte Spanneinrichtungen der bereits erwähnten Andruckmittel. Durch diesen Querträger 17 werden die Seitenwände 2 und 3 weiter stabilisiert.

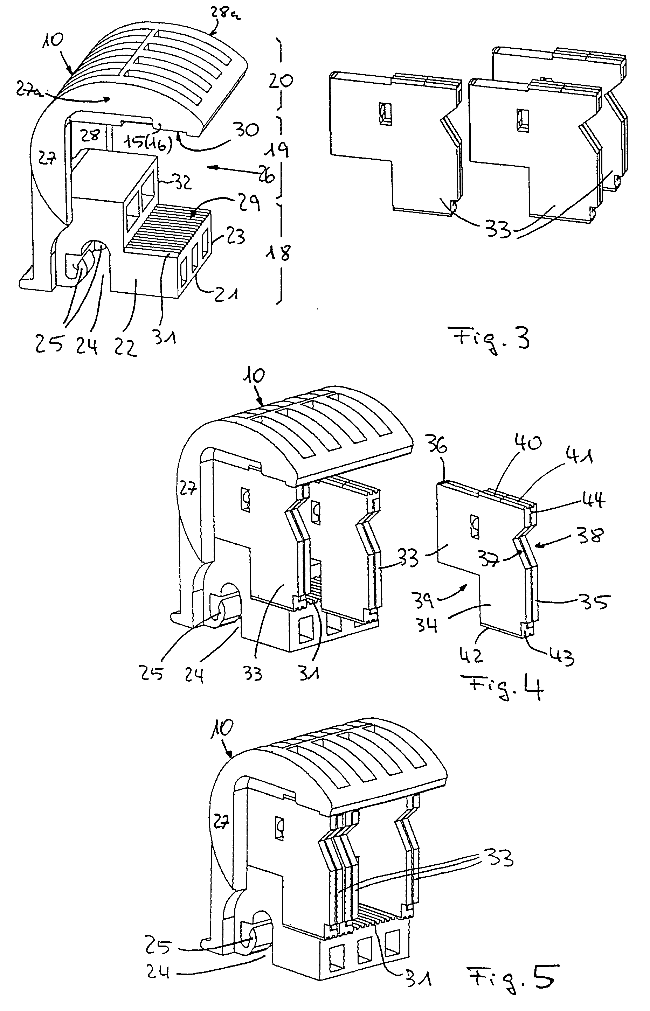

Die Figuren 3 bis 5 zeigen den genaueren Aufbau des Klemmkörpers 10. Dieser Klemmkörper 10 besteht aus einem einstückigen Materialblock, beispielsweise aus Kunststoff, und weist im wesentlichen drei Abschnitte auf, nämlich einen Sockelabschnitt 18, einen Säulenabschnitt 19 und einen Dachabschnitt 20.

Der Sockelabschnitt 18 weist einen Boden 21 und zwei Seitenwände 22, 23 auf, die senkrecht zum Boden 21 und parallel zueinander verlaufen. Die Seitenwände 22 und 23 sind so voneinander beabstandet, daß der Sockelabschnitt 18 passend zwischen die Seitenwände 2 und 3 des Trägerkörpers 1 eingesetzt werden kann. Hierzu befindet sich im Boden 21 des Sockelabschnitts 18 eine längliche Ausnehmung 24, die sich von der Seitenwand 22 zur Seitenwand 23 erstreckt und senkrecht zu diesen verläuft, also in Kanallängsrichtung 7. Mit dieser Ausnehmung 24 wird der Klemmkörper 10 auf die Verbindungsachse 12 des Trägerkörpers 1 aufgesetzt, wenn er in diesen eingeführt werden soll. Die Verbindungsachse 12 kommt dabei im oberen Endbereich der länglichen Ausnehmung 24 zu liegen und wird dort mit Hilfe von Klemmnasen 25 verklemmt, die Seitenwandbereiche der länglichen Ausnehmung 24 bilden. Diese Klemmnasen 25, von denen mehrere vorhanden sein können, erstrecken sich ausgehend vom Boden 21 in Richtung zum oberen Endbereich der länglichen Ausnehmung 24.

Im Abstand oberhalb des Sockelabschnitts 18 befindet sich der Dachabschnitt 20, der über den Säulenabschnitt 19 am Sockelabschnitt 18 gehalten ist. Sockelabschnitt 18, Säulenabschnitt 19 und Dachabschnitt 20 bilden ein Messerkassetten-Aufnahmemaul 26 zur Aufnahme von Messerkassetten, wie noch erwähnt wird.

Der Säulenabschnitt 19 weist zwei Vertikalsäulen 27 und 28 auf, von denen jeweils eine an einer der Seitenwände 22, 23 aufliegt. Diese Vertikalsäulen 27, 28 befinden sich an der hinteren Seite des Klemmkörpers 10 und bilden nach Einsatz des Klemmkörpers 10 in den Gerätekörper 1 die Rückseite des Abisoliergeräts. Die Dicke der Vertikalsäulen 27, 28 in Kanallängsrichtung 7 entspricht etwa der Dicke der Seitenwände 2, 3. Zwischen den Vertikalsäulen 27, 28 ist ein Freiraum vorgesehen, so daß durch diesen Freiraum hindurch von hinten in das Messerkassetten-Aufnahmemaul 26 hineingegriffen werden kann.

Wie bereits erwähnt, wird der Dachabschnitt 20 durch die Vertikalsäulen 27, 28 getragen, wobei die Seitenbereiche des Dachabschnitts 20 einstückig in die Vertikalsäulen 27, 28 übergehen können. Diese Seltenbereiche sind mit den Bezugszeichen 27a, 28a versehen und weisen im Bereich des Mauleingangs die bereits genannten Rastnasen 15, 16 auf. Auch diese Rastnasen 15, 16 weisen eine solche Breite in Kanallängsrichtung 7 auf, daß sie nur oberhalb der Seitenwände 2, 3 zu liegen kommen.

Im Eingangsbereich des Messerkassetten-Aufnahmemauls 26 befinden sich jeweils unten und oben Zahnreihenfelder 29, 30. Diese Zahnreihenfelder 29, 30 liegen aufjeweils ebenen Flächen, die parallel zueinander angeordnet sind. Jedes Zahnreihenfeld 29, 30 weist eine Vielzahl von parallel nebeneinander verlaufenden Zähnen auf, die mit dem Bezugszeichen 31 versehen sind. Diese Zähne 31 erstrecken sich in das Aufnahmemaul 26 hinein, verlaufen also mit ihrer Längsrichtung senkrecht zur Kanallängsrichtung 7 bzw. zur Längsrichtung der Ausnehmung 24 oder der Verbindungsachse 12. Das untere Zahnreihenfeld 29 wird im hinteren Bereich des Aufnahmemauls 26 durch einen Block 32 begrenzt.

Mit anderen Worten erstreckt sich das untere Zahnreihenfeld 29 über die gesamte Breite des Sockelabschnitts 18, kommt also bei Einsatz des Klemmkörpers 10 in den Gerätekörper 1 im gesamten Bereich zwischen den Seitenwänden 2 und 3 zu liegen. Entsprechendes gilt für das obere Zahnreihenfeld 30, das zwischen den Rastnasen 15 und 16 zu liegen kommt, da sich die Rastnasen 15, 15 ja nur oberhalb der Seitenwände 2, 3 befinden.

In das Messerkassetten-Aufnahmemaul 26 des Klemmekörpers 10 lassen sich nun die in Figur 3 gezeigten Messerkassetten 33 einsetzen. Hier sind nur drei Messerkassetten 33 dargestellt, es können aber auch mehr oder weniger in das Aufnahmemaul 26 hineingeschoben werden, wie gewünscht. Die Messerkassetten 33 sind hier der Übersicht wegen ohne Abisoliermesser gezeigt.

Die Figur 4 zeigt genauer, wie die Messerkassetten 33 aufgebaut und in das Messerkassetten-Aufnahmemaul 26 eingesetzt sind.

Jede Messerkassette 33, die z. B. aus Kunststoff hergestellt ist, besteht aus zwei Seltenwänden 34, 35, die über ein Filmscharnier 36 miteinander verbunden sind. Zwischen den Seitenwänden 34 und 35 kommt ein (nicht dargestelltes) Abisoliermesser (siehe Figur 6) zu liegen, das praktisch zwischen den Seitenwänden 34, 35 eingeklemmt ist. Um das Abisoliermesser im Schneidkantenbereich freizulegen, weisen die Seitenwände 34, 35 vordere Ausnehmungen 37, 38 auf, die beispielsweise einen winkelförmigen Verlaufhaben. An der dieser vorderen Seite gegenüberliegenden Rückseite befindet sich das genannte Filmscharnier 36. Die Messerkassette 33 ist darüber hinaus mit einem Ausschnitt 39 versehen, um mit ihrem unteren Bereich gegen den Block 32 schlagen zu können, der als Anschlag dient.

Die jeweiligen Seitenwände 34, 35 einer Messerkassette 33 sind oben und unten bzw. an ihren oberen und unteren Kanten mit Zahnreihenabschnitten 40, 41 bzw. 42, 43 verbunden, wobei jeder Zahnreihenabschnitt mehrere parallel zueinander verlaufende Zähne aufweist, die sich parallel zu den Seitenwänden 34, 35 erstrecken. Jeder der Zahnreihenabschnitte 40, 41 bzw. 42, 43 überragt dabei senkrecht zur Zahnlängsrichtung gesehen die jeweils ihn tragende Seitenwand, so daß bei zusammengeklappten Seitenwänden 34, 35 jeweils oben und unten gemeinsame Zahnreihenfelder erhalten werden.

Wie die Figur 4 erkennen läßt, ist z. B. mit der Seitenwand 34 der Zahnreihenabschnitt 41 fest verbunden, der drei Zähne 44 aufweist, welche sich parallel nebeneinanderliegend in Längsrichtung der Kassettenkante erstrecken. Die Breite dieses Zahnreihenabschnitts 41 ist dabei so gewählt, daß er oberhalb der anderen Seitenwand 35 zu liegen kommt, wenn die Kassette 33 geschlossen ist und das Abisoliermesser zwischen sich aufnimmt. Mit der Seitenwand 35 ist dagegen der Zahnreihenabschnitt 40 fest verbunden, der versetzt zum Zahnreihenabschnitt 41 liegt und die Seitenwand 34 überragt. Im zusammengeklappten Zustand der Seitenwände 34 und 35 fluchten dabei die Zähne 44 beider Zahnreihenabschnitte 40 und 41, so daß ein gemeinsames bzw. durchgehendes Zahnreihenfeld erhalten wird, dessen Zähne sich in Kantenlängsrichtung der Kassette erstrecken. Die Verhältnisse an den unteren Kanten der Seitenwände 34, 35 sind entsprechend, so daß die Zahnreihenabschnitte 42 und 44 ebenfalls ein gemeinsames Zahnreihenfeld ergeben.

Wird die Kassette 33 jetzt in das Messerkassetten-Aufnahmemaul 26 hineingeschoben, so greifen die Zahnreihenfelder an der oberen und unteren Kassettenkante in die Zahnreihenfelder 29, 30 des Messerkassetten-Aufnahmemauls 26 ein, wobei sich die Kassette 33 so weit in das Aufnahmemaul 26 einführen läßt, bis der durch den Ausschnitt 39 gebildete untere Kassettenbereich gegen den Block 32 stößt. Der obere Kassettenbereich kommt dann oberhalb des Blocks 32 zu liegen und ragt noch weiter nach hinten ins Aufnahmemaul 26 hinein. Mit anderen Worten weist das Filmscharnier 36 zur Rückseite des Klemmkörpers 10 und liegt wenigstens annähernd im Bereich des Freiraums zwischen den Vertikalsäulen 27 und 28. Die vordere Kassettenseite kommt dagegen am Eingang des Aufnahmemauls 26 zu liegen und weist in Richtung zum Bearbeitungskanal, wenn der Klemmkörper 10 in den Gerätekörper 1 eingesetzt ist.

Da die Kassetten 33 relativ dünn sind und jeweils nur ein Abisoliermesser enthalten, lassen sie sich an beliebigen Stellen innerhalb des Messerkassetten-Aufnahmemauls 26 anordnen, um somit geeignete Positionen für einen gewünschten Abisoliervorgang einzunehmen.

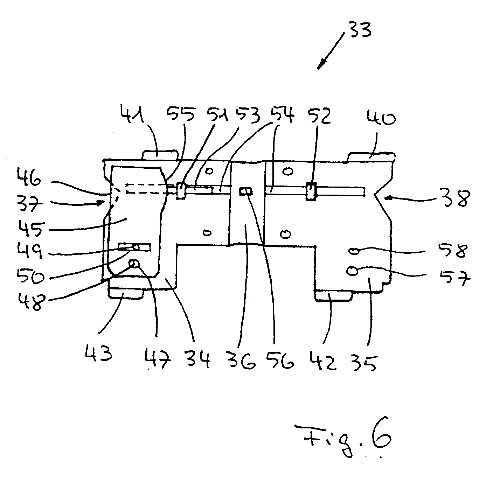

Gemäß Figur 5 befinden sich z. B. zwei Messerkassetten 33 nebeneinanderliegend im linken Bereich des Messerkassetten-Aufnahmemauls 26 und eine Messerkassette ganz rechts im Aufnahmemaul.

Wird mit Hilfe einer derartigen Anordnung z. B. ein Koaxialkabel abisoliert, so besteht infolge der wechselseitig mit den jeweiligen Seitenwänden 34, 35 einer Messerkassette 33 verbundenen Zahnreihenabschnitte nicht die Gefahr, daß bei einer Zugbelastung des Kabels in Richtung des Bearbeitungskanals 6 die Seitenwände 34, 35 der Messerkassette 33 auseinandergerissen werden, was sonst zu einer Freigabe des Abisoliermessers führen würde. Mit anderen Worten wird jede der Seitenwände 34, 35 in den Zahnreihenfeldern 29, 30 verklemmt, so daß ein sicherer Halt des Abisoliermessers in der Messerkassette 33 gewährleistet ist.

Es sei noch darauf hingewiesen, daß auch der obere Zahnreihenabschnitt 40 in Figur 4 gegen einen oberen Anschlag im hinteren Teil des Aufnahmemauls 26 laufen kann, um die Messerkassette 33 bei Belastung in der Messerebene zusätzlich gegen Verkippung zu sichern.

Die Figur 6 zeigt den genaueren Aufbau einer Messerkassette 33.

Die Messerkassette 33 besteht aus zwei ebenen Seltenwänden 34 und 35, wie bereits erwähnt, die über ein Filmscharnier 36 miteinander verbunden sind. An den unteren Kanten der jeweiligen Seitenwände 34, 35 befinden sich die Zahnreihenabschnitte 43, 42, während sich an den oberen Kanten der Seitenwände 34, 35 die Zahnreihenabschnitte 41, 40 befinden. Hier sind sie im Gegensatz zu Figur 4 vertauscht angeordnet. Genauer gesagt liegt der Zahnreihenabschnitt 41 nicht an der Vorderkante sondern der Zahnreihenabschnitt 40.

Auf der Innenfläche der Seitenwand 34 befindet sich ein z. B. aus Stahl bestehendes Abisoliermesser 45. Dieses Abisoliermesser 45 weist eine vordere Schneidkante 46 auf, die durch die Ausnehmungen 37, 38 freigelegt ist. Ansonsten wird das Abisoliermesser 45 vollständig durch die Seitenwände 34 und 35 abgedeckt, wenn diese zusammengeklappt sind.

Im unteren Bereich weist das Abisoliermesser 45, das im wesentlichen rechteckförmig ausgebildet ist, eine Durchgangsöffnung 47 auf, durch die ein Zapfen 48 hindurchgreift, der fest mit der Seitenwand 34 verbunden ist. Um diesen Zapfen 48 läßt sich das Abisoliermesser 45, das flach ausgebildet ist, in seiner Messerebene verschwenken. Oberhalb des Zapfens 48 ist ein weiterer Zapfen 49 mit der Seitenwand 34 fest verbunden, der ein Langloch 50 im Abisoliermesser 45 durchragt. Dieses Langloch 50 erstreckt sich im wesentlichen senkrecht zur Schneidkante 46 bzw. in Verschwenkrichtung des Abisoliermessers 45 und dient dazu, seine Verschwenkstellungen zu begrenzen.

Zum Verschwenken des Abisoliermessers 45 um den Zapfen 48 herum sind Verstellmittel Innerhalb der Messerkassette 33 vorhanden. Diese Verstellmittel enthalten einen Block 51, der in entsprechenden Ausnehmungen 52, die sich an den Innenseiten der Seitenwände 34 und 35 befinden, drehfestgehalten ist. Der Block 51 weist eine Durchgangsgewindebohrung auf, durch die eine Gewindestange 53 hindurchgeschraubt ist. Diese Gewindestange 53 kann in Führungsnuten 54 geführt sein, die sich an den Innenselten der Seitenwände 34 und 35 befinden. Die Gewindestange 53 schlägt mit ihrer vorderen Stirnseite gegen einen konvexen Bereich 55 des Abisoliermessers 45, der an dessen hinterer Kante liegt. An ihrer anderen Stirnseite weist die Gewindestange 53 eine Mitnehmereinrichtung auf, beispielsweise einen Schlitz, um sie mit einem Schraubendreher verstellen zu können. Damit dieser Schlitz zugänglich ist, wenn sich die Messerkassette 33 in geschlossenem Zustand befindet, ist im Filmscharnier 36 eine entsprechende Öffnung 56 vorhanden.

In der Seitenwand 35 befinden sich noch Öffnungen 57 und 58, in die die Zapfen 48 und 49 klemmend eingreifen. Weitere derartige Zapfen-Lochpaare können vorhanden sein, um eine noch bessere Verklemmung der Seitenwände 34 und 35 zu erhalten.

Der zur Verstellung der Gewindestange 53 erforderliche Schraubendreher kann z. B. im Abisoliergerät selbst gelagert sein, etwa in einer geeigneten Ausnehmung im Klemmkörper 10. Dort lassen sich auch andere Geräteeinrichtungen zwischenlagern, etwa Andruckstempel für die nicht dargestellten Andruckmittel. Hierfür steht z. B. der untere Bereich der Ausnehmung 24 zur Verfügung.

## Patentansprüche

1. Abisoliergerät mit einem einen Bearbeitungskanal (6) aufweisenden Gerätekörper (1), wenigstens einer Messerkassette (33) zum Positionieren wenigstens eines Abisoliermessers (45) am Umfang des Bearbeitungskanals (6) sowie in einer senkrecht zu seiner Kanallängsrichtung (7) liegenden Ebene, und einem mit dem Gerätekörper (1) verbindbaren Klemmkörper (10) zum Halten der Messerkassette (33), **dadurch gekennzeichnet,** daß
- der Klemmkörper (10) ein Messerkassetten-Aufnahmemaul (26) aufweist,
- die Messerkassette (33) in Kanallängsrichtung eine sehr viel geringere Breite als das Aufnahmemaul (26) hat, und
- im Aufnahmemaul (26) Haltemittel (29, 30) vorhanden sind, um die Messerkassette (33) an in Kanallängsrichtung (7) unterschiedlichen Positionen zu halten.

2. Abisoliergerät nach Anspruch 1, **dadurch gekennzeichnet,** daß im Aufnahmemaul (26) mehrere Messerkassetten (33) vorhanden sind.

3. Abisoliergerät nach Anspruch 2, **dadurch gekennzeichnet,** daß jede Messerkassette (33) mit nur einem Abisoliermesser (45) bestückt ist.

4. Abisoliergerät nach Anspruch 1, 2 oder 3, **dadurch gekennzeichnet,** daß die Haltemittel (29, 30) durch an einander gegenüberliegenden Maulseiten vorhandene Zahnreihen gebildet sind, in deren Zwischenräume Zähne (44) einführbar sind, die sich an gegenüberliegenden Kanten der Messerkassette (33) befinden.

5. Abisoliergerät nach einem der Ansprüche 1 bis 4, **dadurch gekennzeichnet,** daß sich das Messerkassetten-Aufnahmemaul (26) in Richtung zum Bearbeitungskanal (6) öffnet.

6. Abisoliergerät nach einem der Ansprüche 1 bis 5, **dadurch gekennzeichnet,** daß eine jeweilige Messerkassette (33) aus zwei über ein Scharnier (36) miteinander verbundenen Seitenwänden (34, 35) besteht, die das Abisoliermesser (45) zwischen sich haltend aufnehmen.

7. Abisoliergerät nach Anspruch 6, **dadurch gekennzeichnet,** daß die Seitenwände (34, 35) vordere Ausnehmungen (37, 38) zur bereichsweisen Freilegung der Schneidkante (46) des Abisoliermessers (45) aufweisen.

8. Abisoliergerät nach Anspruch 6 oder 7, **dadurch gekennzeichnet,** daß an den oberen und unteren Kanten beider Seitenwände (34, 35) Zahnreihenabschnitte (40, 41; 42, 43) vorhanden sind, die senkrecht zur Zahnlängsrichtung die jeweilige Seitenwand in Richtung zur anderen Seitenwand überragen und bei zusammengeklappten Seltenwänden (34, 35) jeweils oben und unten ein gemeinsames Zahnreihenfeld ergeben.

9. Abisoliergerät nach einem der Ansprüche 6 bis 8, **dadurch gekennzeichnet,** daß das Abisoliermesser (45) um einen Schwenkzapfen (48) schwenkbar gelagert ist, und daß zwischen den Seltenwänden (34, 35) Stellmittel (51, 53) zur Einstellung der Verschwenkstellung des Abisoliermessers (45) vorhanden sind.

10. Abisoliergerät nach Anspruch 9, **dadurch gekennzeichnet,** daß das Abisoliermesser (45) ein in Verschwenkrichtung verlaufendes Langloch (50) aufweist, durch das ein weiterer Zapfen (49) hindurchgreift.

11. Abisoliergerät nach Anspruch 9 oder 10, **dadurch gekennzeichnet,** daß die Verstellmittel einen zwischen den Seitenwänden (34, 35) drehfest gehaltenen Block (51) mit Gewindedurchgangsbohrung aufweisen, durch die eine Gewindestange (53) hindurchgeschraubt ist.

12. Abisoliergerät nach Anspruch 11, **dadurch gekennzeichnet,** daß die Stirnseite der Gewindestange (53) durch eine Öffnung (56) im Scharnier (36) zugänglich ist.

13. Abisoliergerät nach Anspruch 12, **dadurch gekennzeichnet,** daß der Klemmkörper (10) eine im hinteren Aufnahmemaulbereich liegende Durchgangsöffnung aufweist.

14. Abisoliergerät nach einem der Ansprüche 6 bis 13, **dadurch gekennzeichnet,** daß die Messerkassette (33) aus Kunststoff hergestellt und das Scharnier (36) ein Filmscharnier ist.
